# EUROPÄISCHE PATENTANMELDUNG

(11) **EP 3 184 413 A2**
(43) Veröffentlichungstag der Anmeldung: **28.06.2017**
(21) Anmeldenummer: 16205781.4
(22) Anmeldetag: 21.12.2016
(51) Int. Cl.: B62M 6/90, B60L 11/18, B62M 6/80, B60L 11/00, B62H 3/04, H02J 7/00

(54) **LADE- UND ÜBERWACHUNGSSYSTEM ZUM AUFLADEN EINER STROMSPEICHERVORRICHTUNG FÜR ELEKTROZWEIRÄDER**

(30) Priorität: 22.12.2015 AT 5022815 U
(71) Anmelder: E-Loading Systems GmbH, 4817 St. Konrad/Gmunden (AT)
(72) Erfinder: Schweiger, Martin, 4817 St. Konrad/Gmunden (AT)
(74) Vertreter: Staudt, Armin Walter

(57) **Zusammenfassung**

Die vorliegende Erfindung betrifft ein Lade- und Überwachungssystem zum Aufladen einer batterieähnlichen Stromspeichervorrichtung für Elektrozweiräder und gleichzeitige Überwachung der Stromspeichervorrichtung, wobei die Stromspeichervorrichtung am Elektrozweirad fest montiert bleibt. Das System besteht aus einer Ladestation (1), welche mindestens ein Lademodul (2) umfasst und einem vor Vandalismus geschützt am Elektrozweirad montierten Datenträger (7), welcher mit einer Datenleseeinrichtung (8) im Lademodul (2) kommuniziert zur Bestimmung der Ladestromeigenschaften und Überwachung des Ladeverhaltens der Stromspeichervorrichtung.

## Beschreibung

### Technologischer Hintergrund

Die vorliegende Erfindung bezieht sich auf ein Lade- und Überwachungssystem zum Aufladen einer Stromspeichervorrichtung für Elektrozweiräder und gleichzeitige Überwachung der Stromspeichervorrichtung.

Insbesondere geht es um eine System zum Aufladen einer batterieähnlichen Stromspeichervorrichtung für Elektrozweiräder wie Elektrofahrräder, auch E-Bikes genannt oder Elektromotorräder und einem zugehörigen Überwachungs- und gegebenenfalls auch Verwaltungssystem, welches mit dem Ladesystem in Wirkverbindung steht. Es ist sowohl für Leihräder als auch für personenbezogene Fahrräder geeignet und ist bevorzugt für die Verwendung im öffentlichen Raum gedacht.

### Stand der Technik

Es ist bekannt, die Energieversorgung von Elektrofahrrädern oder Elektromotorrädern durch einen austauschbar am Rahmen angeordneten Stromspeicher zu erwirken, wobei die unterschiedlichsten Typen von Stromspeicher vorzufinden sind. Häufig werden Nickel-Metallhydrid-, Nickel-Cadmium- oder Lithium- Ionen-Akkumulatoren (Akkus) verwendet. Die speicherbare Energie beträgt etwa 18 Amperestunden bei einer Nennspannung von 24 bis 36 Volt. Aufgrund der begrenzten Speicherkapazität haben jedoch alle Akkus nur eine begrenzte Reichweite. Um diese zu erweitern ist es zumeist erforderlich ein Ladegerät mitzuführen, um den entladenen Energiespeicher unterwegs wieder aufzuladen. Dafür ist ein geeigneter Stromnetzanschluss mit einer passenden Steckverbindung erforderlich und es bedarf einer größeren Wartezeit, bis der Stromspeicher wieder aufgeladen ist. Alternativ kann der Fahrer auch einen aufgeladenen Reserve-Akku mitführen, den er bei Bedarf unterwegs gegen den entladenen Akku tauscht.

Um den Nachteil der begrenzten Reichweite zu beheben und das Mitführen eines Reserve Akkus zu umgehen, sind aus dem Stand der Technik unterschiedlichste Erfindungen bekannt, welche im Wesentlichen auf der Bereitstellung von öffentlich zugänglichen Servicestationen beruhen. Einige Systeme, wie etwa jenes aus der DE 10 2010 040 388 A1 bekannt gewordene bestehen aus Serviceautomaten, in welche der demontierte Akku zur Aufladung deponiert oder der entleerte Akku gegen einen aufgeladenen Akku ausgetauscht werden kann. Dieser Service ist jedoch nur für einen vorbestimmten Kreis berechtigter Benutzer zugänglich und nur für einheitliche Energiespeicher geeignet und umfasst ein mit einem Verriegelungssystem zusammenwirkendes Authentifizierungssystem.

Ein ähnliches System ist in der DE 10 2010 048 338 A1 offenbart, welches ein kombiniertes Park-, Schließ- und Ladesystem für eine öffentliche Ladestation beschreibt, wobei der Akku am Fahrzeug verbleibt und über ein Ladekabel mit der Ladestation verbunden wird. Nachteilig bei diesem System ist, dass es nur eine einzige Systemspannung zur Verfügung stellt, welche über ein am Rad befestigtes zweites Systemteil erst in den erforderlichen Ladestrom umgewandelt wird. Das Rad muss mit diesem zweiten Systemteil vom Radhersteller ausgerüstet oder nachträglich vom Benützer nachgerüstet werden um dieses Ladesystem nutzen zu können. Durch die Notwendigkeit dieses zweiten Systemteils wird einerseits der Benutzerkreis erheblich eingeschränkt, andererseits ist dieses zweite Systemteil teuer und Vandalismus anfällig.

Die beschriebenen Ladestationen schränken durch ihre Wirkweise den Benutzerkreis erheblich ein. Um hier Abhilfe zu schaffen, schlägt die DE 20 2012 103 996 U ein Ladesystem für Elektrofahrzeuge mittels Ladekabel vor, wobei das Ladekabel einen ersten Steckverbinder aufweist, der mit einem Steckverbinder an der Ladestation verbindbar ist und wobei im ersten Steckverbinder eine von der Ladestation auslesbare Codierung angeordnet ist, die technische Informationen des aufzuladenden Akkus bereit hält. Die Ladestation besitzt einen Regler zum Einstellen der erforderlichen Niedervoltspannung im Bereich unter 50 Volt und zum Wählen unterschiedlicher Stromstärken mit mehreren Anschlussbuchsen. Weiters ist eine Gruppe von Ladekabeln vorgesehen, wobei alle Ladekabel gleichartige erste Steckverbinder und individuell an den jeweiligen Akku angepasste, zweite Steckverbinder zur Herstellung einer elektrischen Verbindung zum Akku aufweisen. Obwohl dieses System den Kreis der Benutzer theoretisch auf alle Elektrofahrzeuge erweitert, muss für jedes Akkumodell ein entsprechend codiertes Ladekabel vorhanden sein. Dabei ist von Nachteil, dass die Anzahl gleichartig codierter Ladekabel begrenzt ist, sodass nur eine begrenzte Anzahl von gleichartigen Akkus zur gleichen Zeit geladen werden kann, wodurch die Effizienz der Ladestation sehr eingeschränkt ist. Ein weiterer erheblicher Nachteil ist auch darin zu sehen, dass Systeme mit Ladekabel prädestiniert sind für Vandalen Akte, da Ladekabel leicht zu durchtrennen beziehungsweise entwendbar sind.

Aus der EP 2 325 071 A2 ist ein Lade- und Überwachungssystem für Elektrozweiräder gemäß der eingangs genannten Gattung bekannt.

### Technische Aufgabenstellung

Die vorliegende Erfindung stellt sich daher die Aufgabe, ein Ladesystem für mindestens ein, bevorzugt jedoch mehrere Elektrozweiräder zur Verfügung zu stellen, welches die genannten Nachteile zuverlässig vermeidet. Das System soll nicht nur für den privaten sondern auch für den Gebrauch im öffentlichen Raum geeignet sein und zur Aufladung von allen gängigen Akkumodellen dienen, wobei die Anzahl der gleichzeitig aufladbaren Akkus modellunabhängig nur von der Anzahl der zur Verfügung stehenden Stellplätze für Elektrozweiräder begrenzt sein soll.

### Allgemeine Beschreibung der Erfindung

Diese Aufgabe wird ausgehend von einem Lade- und Überwachungssystem gemäß der eingangs genannten Gattung erfindungsgemäß dadurch gelöst, dass die Stromspeichervorrichtung am Elektrozweirad fest montiert ist, und versehen ist mit einer Ladestation, welche mindestens ein Lademodul, pro Lademodul jeweils zwei mit einer Radnabe kommunizierende Halteeinrichtungen und zwei - bevorzugt an den freien Enden der Radnabe fest montierte - Einsteckteile umfasst, und mit einem am Elektrozweirad montierten Datenträger, welcher zur Kommunikation mit einer Datenausleseeinrichtung innerhalb des Lademoduls zur Bestimmung der Ladestromeigenschaften und Überwachung des Ladeverhaltens der Stromspeichervorrichtung ausgelegt ist, wobei paarweise zusammenwirkende Halteeinrichtungen an benachbarten Streben eines ortsfest montierten Zweiradständers fest fixiert sind, und wobei die Halteeinrichtungen jeweils eine Ausnehmung besitzen, in welche je ein Einsteckteil einführbar ist.

Der programmierbare Datenträger, beispielsweise ein Chip, ist direkt am Elektrozweirad möglichst vor Vandalismus gesichert innerhalb eines von zwei Einsteckteilen angeordnet. Die Einsteckteile sind jeweils mit den freien Enden der Nabe eines Rades verbunden.

Der Chip kann ein RFID-Chip oder ein äquivalenter maschinenlesbarer Datenträger sein. Er enthält Daten zur Ladestromerkennung, welche von einer im Lademodul integrierten Empfangsantenne ausgelesen werden können, sobald sich der Chip in geeignetem Abstand zur Empfangsantenne befindet. Über diese Daten erfährt das Lademodul welcher Akkutyp angeschlossen ist und stellt selbständig die erforderlichen Ladestromeigenschaften zum Aufladen bereit.

Das Lademodul besteht unter anderem aus einem zusammenwirkenden Paar von Halteeinrichtungen, wobei diese Halteeinrichtungen an benachbarten Streben oder artverwandten Vorrichtungen eines ortsfest montierten Zweiradständers fest fixiert sind. Die Halteeinrichtungen besitzen jeweils eine Ausnehmung in welche je ein Einsteckteil, welches bevorzugt am freien Ende der Radnabe eines Rades eines Elektrozweirades fest montiert ist, einführbar ist. Dabei kann die Einführrichtung von oben, von schräg oben oder seitlich sein. Weiters besitzt das Lademodul eine elektrische Verbindung zu einer Stromversorgung, wobei die Stromleitungen bevorzugt innerhalb der Streben verlaufen, wodurch die Stromleitungen vor Witterung und vor Vandalismus geschützt sind.

Die Halteeinrichtung enthält Ladekontakte, welche beispielsweise in der Art jener Ladekontakte ausgeführt sein können, welche in der EP 2 325 071 A2 offenbart sind. Es ist aber auch jede andere technisch mögliche Ausbildung von Ladekontakten, auch Stromspulen zur induktiven Aufladung der Akkus denkbar. Zusätzlich sind in einer der beiden Halteeinrichtungen und /oder im Lademodul die Empfangsantenne zum Auslesen der im Chip gespeicherten Ladestromdaten, sowie in den Halteeinrichtung integrierte und damit von außen nicht zugängliche Halte- und Verriegelungsvorrichtungen vorhanden, welche beispielsweise in Ausnehmungen eingreifen, die in den zwei Einsteckteilen für den Eingriff der Verriegelungsvorrichtung, insbesondere eines Bolzens vorgesehen sind, sobald die Einsteckteile in die Ausnehmungen der Halteeinrichtungen eingeführt sind. Alternativ besteht die Verriegelungsvorrichtung aus Kontaktteilen, welche den Einsteckteil teilweise umfassen, wobei der Bolzen mindestens einen Kontaktteil in seiner Rückstellung blockiert und damit den Einsteckteil in der Ausnehmung fixiert, bis die Blockade durch geeignete Mittel aufgehoben und das Einsteckteil zur Entnahme freigegeben wird, wobei die geeigneten Mittel beispielsweise ein Bezahlen des Ladeservice sein kann, in welcher Form auch immer.

In einer Weiterbildung der Erfindung können im Lademodul ein Messmodul zur Überwachung des Ladevorganges und zur Überwachung des Akkuzustandes auch nach dem Vollaufladen des Akkus, sowie Einrichtungen zur Anzeige des Ladezustandes des Akkus, und Kommunikationseinrichtungen zur Kommunikation des Lademoduls mit einem externen Server vorgesehen sein.

In einer bevorzugten Ausgestaltung der Erfindung kann die Verriegelungsvorrichtung zur Aufladung des Akkus benutzt werden, indem sie den Anschluss an den Stromkreis bereitstellt. Weiters kann das Lademodul mit einem Münzschloss und/oder einer Elektronikeinheit zum Austausch von Zahlungsinformationen mit einer EC-Karte oder Kreditkarte versehen sein, wobei das Lademodul seinen Dienst erst nach Abgabe eines vorbestimmten Geldbetrages aufnimmt oder das Elektrozweirad erst nach Rechnungsstellung und/oder Bezahlung zur Entnahme aus den Halteeinrichtungen freigibt. Eine alternative Bezahlung kann aber auch über ein Smartphone mit Zahlfunktion erfolgen.

Bevorzugt ist die Ladestation eine Sende- und Empfangseinheit zur Kommunikation mit zumindest einem externen Datengerät über ein Funknetz, insbesondere ein Mobilfunknetz oder WLAN. Sie kann erfindungsgemäß ein Anfragesignal vom externen Datengerät empfangen und ein Antwortsignal an das externe Datengerät übersenden. Das externe Datengerät kann dabei ein Server, ein Mobiltelefon, ein Smartphone, ein Notebook oder dergleichen sein.

Ein Benutzer, der beispielsweise sein E-Bike zum Aufladen an der Ladestation abstellen möchte kann beispielsweise mittels einer auf einem Mobilfunkgerät installierten Software-Anwendung (im Folgenden auch als "App" bezeichnet), nach einem freien Stellplatz in seiner Umgebung suchen und diesen gegebenenfalls auch für eine bestimmte Zeitspanne reservieren.

Weiters kann über den Server der Sende- und Empfangseinheit ein upload an das Lademodul übermittelt werden. In einer weiteren Ausbildung besitzt die Ladestation ein Bedienfeld, beispielsweise ein Touchscreen über welches der Benutzer direkt mit dem Lademodul und/oder dem Server kommuniziert. Dabei kann über eine separate Dateneingabe eine Identifizierung des Benutzers erfolgen oder die Abrechnung der Leihgebühr eines Leihrades beispielsweise bei Entnahme und/oder bei Rückstellung erfolgen oder dergleichen mehr.

Insbesondere kann über den Datenaustausch zwischen der Sende- und Empfangseinheit und dem Server jederzeit festgestellt werden, welches Elektrozweirad sich wann wo befindet, sobald ein Kontakt zu einer Ladestation hergestellt ist, wodurch beispielsweise die Verwaltung von Leihrädern erheblich vereinfacht wird.

Der im Einsteckteil verborgene Chip kann in einer bevorzugten Ausführungsform nicht nur zur Ladestromerkennung, also zur Erfassung der Information, welche Stromstärke und welche Spannung der Akku zum Aufladen benötigt, genützt werden, er kann auch Daten zur Identifizierung des Elektrozweirades bzw. seines Besitzers beinhalten, welche gegebenenfalls vom Lademodul an den Server übermittelt werden.

In einer weiteren Weiterentwicklung der Erfindung ist im Lademodul eine Diagnoseeinrichtung zur Überprüfung der Funktionsqualität des Akkus integriert, welche über die bereits erwähnte App vom Benutzer abgefragt werden kann. Dabei können Informationen über die Sicherheit zum richtigen Verhalten des Aufladevorgangs und Vollhaltens des Akkus, Erkennung von Fehlverhalten des Akkus, Reaktionen des Akkus bei Überhitzung usw. überwacht werden, wobei bei Gefahr in Verzug der Ladevorgang unterbrochen und der Server bzw. das Handy des Besitzers/Nutzers mit einer entsprechenden Information versorgt werden.

Durch die Integration des Datenchips im Inneren des Einsteckteiles und die im Innern der Halteeinrichtung verborgenen Funktionsteile des Lademoduls sind die Möglichkeiten für Vandalismus weitgehend reduziert. Trotz dieser technischen Maßnahmen und dem Umstand, dass die Verriegelungsvorrichtung nur nach einer ordnungsgemäßen Beendigung des Ladevorganges - in welcher Art auch immer - die Radnabe frei gibt, kann natürlich nicht ausgeschlossen werden, dass mit entsprechender Brutalität das Elektrozweirad trotzdem aus der Ladestation entrissen wird. Für diesen Fall einer nicht gewünschten Kontaktunterbrechung ist in einer bevorzugten Variante der Erfindung vorgesehen, dass das Lademodul unmittelbar eine Diebstahlinformation an den Server und/oder an das Handy des Besitzers gegebenenfalls unter Angabe des Diebstahlortes absendet.

In einer besonders bevorzugten Variante der Erfindung ist für eine Reihe von Lademodulen vorgesehen, dass alle Lademodule an einer Ladestation gemeinsam über ein Funkmodul mit dem externen Server kommunizieren.

### Ausführungsbeispiel

Die Erfindung wird nachfolgend anhand der Figuren näher erläutert. Darin zeigt:
- Fig. 1: den schematischen Aufbau einer Ladestation, hier mit nur einem Stellplatz und einem Lademodul;
- Fig. 2: eine Ladestation analog zu Fig. 1, jedoch mit einer alternativen Halteeinrichtung;
- Fig. 3: die Halteeinrichtung aus Fig. 2 losgelöst von der Strebe mit eingeführtem Einsteckteil;
- Fig. 4: das Einsteckteil aus Fig. 3;
- Fig. 5: die Halteeinrichtung aus Fig. 1;
- Fig. 6: die Halteeinrichtung aus Fig. 5 mit eingeführtem Einsteckteil;
- Fig. 7: den schematischen Aufbau einer Ladestation für den privaten Gebrauch;
- Fig. 8: eine alternative Ausgestaltung einer Ladestation für den privaten Gebrauch;
- Fig. 9: eine schematische Darstellung einer Ladestation für den öffentlichen Bereich mit Anbindung an einen externen Server.

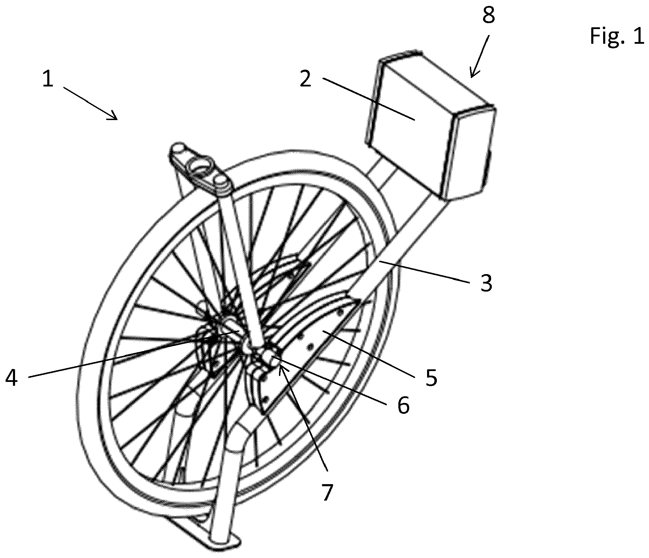

Die in **Fig. 1** dargestellte Ladestation besteht aus einem Gestänge zum Abstellen eines Elektrozweirades, wobei hier zur besseren Darstellung nur ein Rad mit der Radnabe 4 gezeigt ist, wobei an den freien Enden der Radnabe 4 je ein Einsteckteil 6 fest montiert ist. Die Einsteckteile 6 sitzen in Ausnehmungen von zwei Halteeinrichtungen 5, welche an zueinander parallelen Streben 3 befestigt sind. Die Streben 3 münden in einem Lademodul 2, in welchem sich eine Datenausleseeinrichtung 8 befindet, welche die gespeicherten Daten von einem Datenträger 7 ausliest, wobei sich der Datenträger 7 innerhalb des Einsteckteiles 6 befindet. Auf diese Weise ist der Datenträger vor Verschmutzung und Vandalismus ausreichend geschützt und kann während der Stromaufladung auch nicht entfernt werden. Innerhalb der Halteeinrichtung 5 befindet sich eine hier nicht erkennbare Verriegelungseinrichtung 9, welche ebenfalls vor Vandalismus geschützt ist und verhindert, dass das Rad von unberechtigten Personen aus der Ladestation entnommen werden kann.

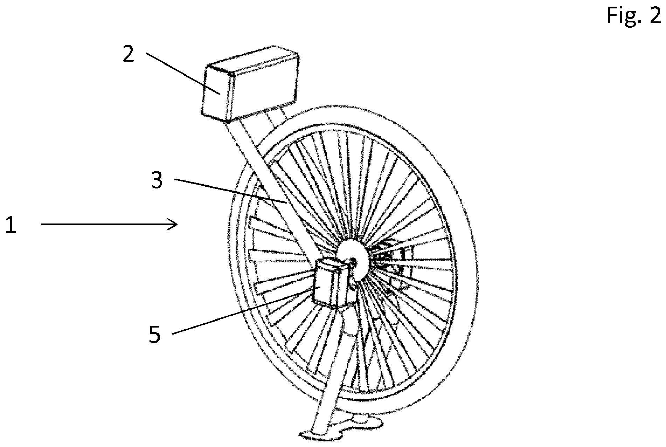

Die in **Fig. 1** dargestellte Halteeinrichtung stellt nur eine mögliche Variante der Ausgestaltung dar. Es versteht sich von selbst, dass die Ausgestaltung der Halteeinrichtung jede andere beliebige Form annehmen kann. Exemplarisch für diese Formenvielfalt ist in **Fig. 2** eine mögliche Variante einer Halteeinrichtung in einer Ladestation dargestellt. Die Erfindung beschränkt sich ausdrücklich nicht nur auf diese beiden Varianten von Halteeinrichtungen, der Einfachheit halber wird aber im Folgenden nur auf diese beiden Varianten Bezug genommen. Allen Halteeinrichtungen ist aber gemein, dass die Verriegelungsvorrichtung vor Vandalismus geschützt innerhalb der Halteeinrichtung angeordnet ist und daher während des Ladevorgangs von außen nicht zugänglich ist.

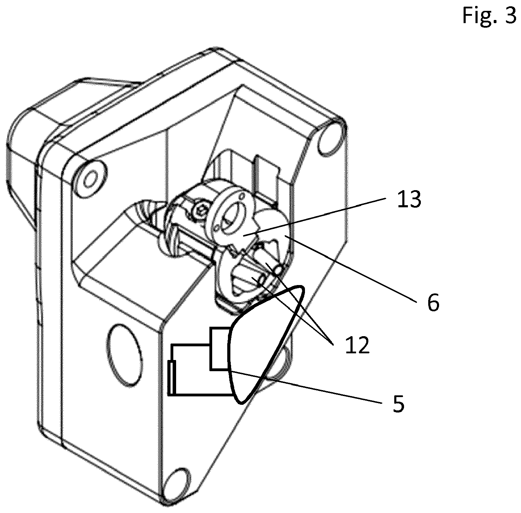

**Fig. 3** zeigt die Halteeinrichtung mit eingeführtem Einsteckteil, wobei zur besseren Veranschaulichung sowohl die Strebe als auch die Radnabe nicht dargestellt sind. Am Einsteckteil 6 erkennt man die Befestigung 13 mittels welcher das Einsteckteil an einem freien Ende der Radnabe 4 befestigt ist. Selbstverständlich kann die Befestigung 13 auch jede andere technisch geeignete Form annehmen. Der über die innenliegenden Kontaktbleche oder durch Induktionsschleifen von der Halteeinrichtung 5 zum Einsteckteil 6 übertragene Strom zum Aufladen des Elektrozweirades wird über die Stromleitungen 12 des Einsteckteiles 6 zur Stromspeichereinrichtung weiter geleitet.

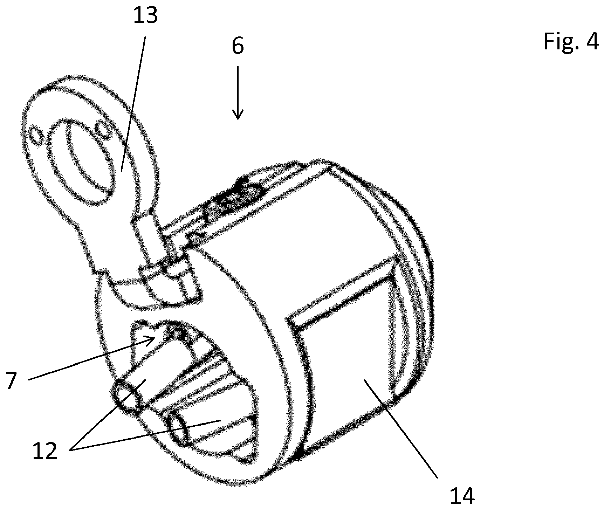

In **Fig. 4** sieht man eine mögliche Anordnung eines Kontaktbleches 14, sein Pendant ist auf der gegenüber liegenden Seite am Einsteckteil 6 angeordnet. Innerhalb des Einsteckteiles 6 befindet sich der gut geschützte Datenträger 7. Die Stromübertragung zwischen Halteeinrichtung 5 und Einsteckteil 6 kann über elektrische Kontakte erfolgen, sie kann aber auch induktiv durchgeführt werden.

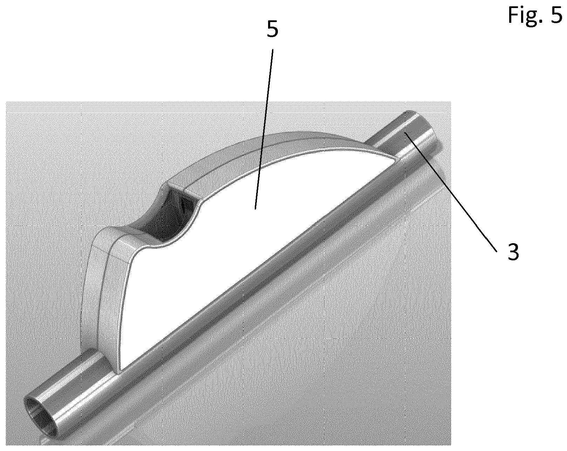

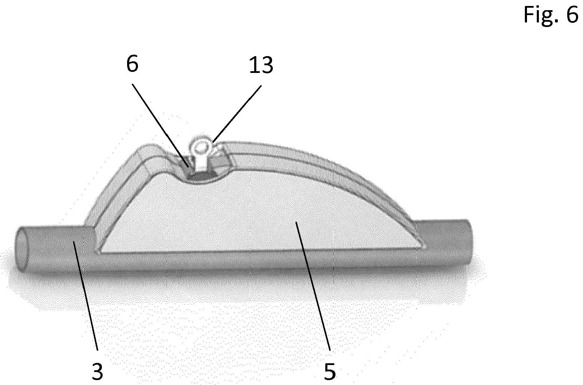

**Fig. 5** zeigt eine alternative Halteeinrichtung 5, befestigt an einer Strebe 3. In **Fig. 6** ist das Einsteckteil 6 in die Halteeinrichtung aus Fig. 5 vollständig eingeführt.

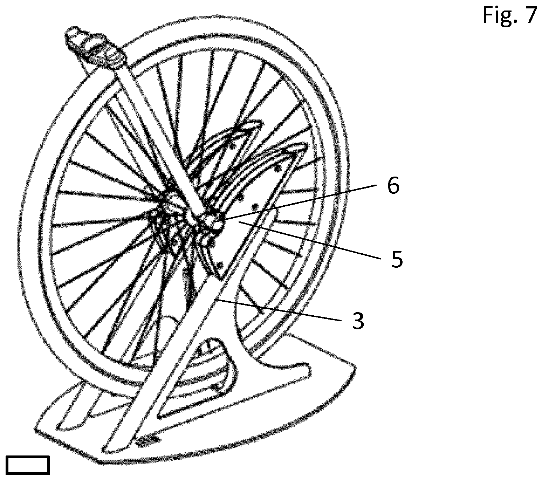

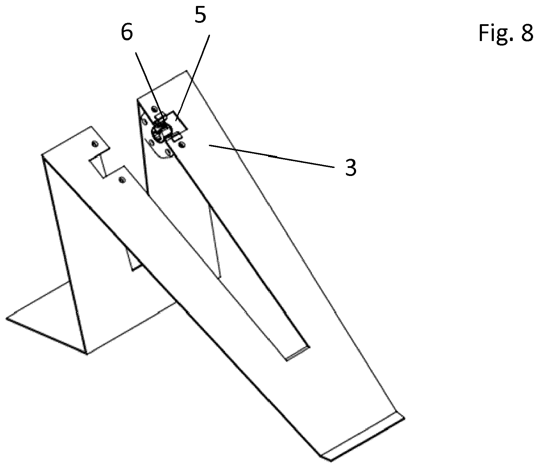

Die erfindungsgemäße Ladestation ist in erster Linie für den Gebrauch im öffentlichen Raum gedacht. Selbstverständlich kann sie aber auch auf privatem Grund angewendet werden. Auch hier ist mitunter ein Schutz vor Raub oder Vandalismus nötigt. Aus den **Fig. 7** **und** **8** gehen zwei alternative Ausführungsformen für den privaten Gebrauch hervor. Auch hier gilt wieder, dass diese Darstellungen nur exemplarisch für alle technisch möglichen Ausführungsformen gedacht sind.

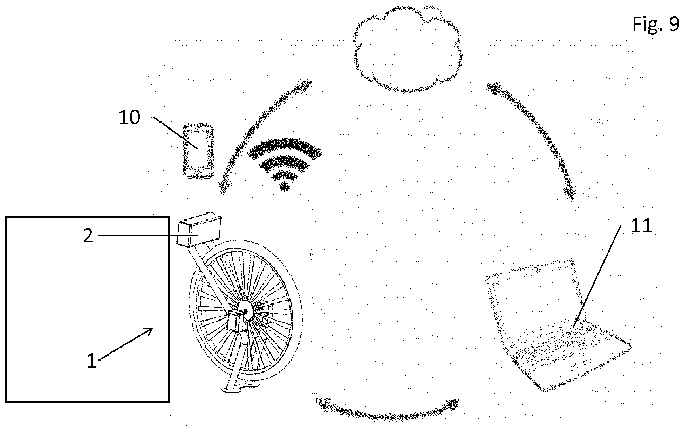

**Fig. 9** zeigt schematisch den Aufbau einer öffentlichen Ladestation 1 mit Lademodul 2, welches über eine Kommunikationseinrichtung 10 in Verbindung mit einem externen Server 11 steht. Üblicherweise befinden sich an einer öffentlichen Ladestation nebeneinander mehrere Stellplätze für Elektrozweiräder, wobei jeder Stellplatz ein Lademodul 2 besitzt. Alle Lademodule 2 können über eine gemeinsame Kommunikationseinrichtung 10 untereinander und/oder mit dem externen Server, aber auch mit jeder anderen mobilen Datenverarbeitungseinrichtung beispielsweise per App kommunizieren.

## Patentansprüche

1. Lade- und Überwachungssystem zum Aufladen einer batterieähnlichen Stromspeichervorrichtung für Elektrozweiräder und gleichzeitige Überwachung der Stromspeichervorrichtung, **dadurch gekennzeichnet, dass** die Stromspeichervorrichtung am Elektrozweirad fest montiert bleibt, versehen mit einer Ladestation (1), welche mindestens ein Lademodul (2), pro Lademodul jeweils zwei mit einer Radnabe (4) kommunizierende Halteeinrichtungen (5) und zwei Einsteckteile (6) umfasst und mit einem am Elektrozweirad montierten Datenträger (7), welcher zur Kommunikation mit einer Datenausleseeinrichtung (8) innerhalb des Lademoduls (2) zur Bestimmung der Ladestromeigenschaften und Überwachung des Ladeverhaltens der Stromspeichervorrichtung ausgelegt ist, wobei paarweise zusammenwirkende Halteeinrichtungen (5) an benachbarten Streben (3) eines ortsfest montierten Zweiradständers fest fixiert sind, und wobei die Halteeinrichtungen (5) jeweils eine Ausnehmung besitzen, in welche je ein Einsteckteil (6) einführbar ist.

2. Lade- und Überwachungssystem nach Anspruch 1, **dadurch gekennzeichnet, dass** der Datenträger (7) ein programmierbarer Chip, insbesondere ein RFID-Chip ist, welcher innerhalb eines von zwei Einsteckteilen (6) angeordnet ist, wobei diese Einsteckteile (6) jeweils bevorzugt mit den freien Enden der Radnabe (4) eines Rades verbunden sind.

3. Lade- und Überwachungssystem nach Anspruch 1 oder 2, **dadurch gekennzeichnet, dass** innerhalb zumindest einer der beiden Halteeinrichtungen (5) integrierte und damit von außen nicht zugängliche Halte- und Verriegelungsvorrichtungen (9), insbesondere Bolzen vorgesehen sind, welche zumindest einen der beiden Einsteckteile (6) in den Halteeinrichtungen (5) fixieren, bis das Rad von einem berechtigten Nutzer entnommen wird.

4. Lade- und Überwachungssystem nach Anspruch 1, 2 oder 3, **dadurch gekennzeichnet, dass** der Datenträger (7) Daten zur Ladestromerkennung enthält, welche von einer im Lademodul (2) integrierten Datenausleseeinrichtung (8), insbesondere einer Empfangsantenne ausgelesen werden, sobald sich der Datenträger (7) in geeignetem Abstand zur Datenausleseeinrichtung (8) befindet, wobei das Lademodul (2) über diese Daten erfährt welcher Typ von Stromspeichervorrichtung angeschlossen ist und wobei das Lademodul (2) aufgrund dieser Daten selbständig die erforderlichen Ladestromeigenschaften zum Aufladen bereit stellt und bevorzugt eine Diagnoseeinrichtung zur Überwachung des Ladevorgangs und zur Überwachung des Stromspeicherzustandes auch nach dem Vollaufladen enthält.

5. Lade- und Überwachungssystem nach einem der Ansprüche 1 bis 4, **dadurch gekennzeichnet, dass** das Lademodul (2) eine elektrische Verbindung zu einer Stromversorgung besitzt, wobei Stromleitungen zu den Halteeinrichtungen (5) bevorzugt innerhalb von Streben (3) verlaufen und zur Stromübertragung in den Halteeinrichtungen (5) Ladekontakte zur direkten Stromübertragung oder Stromspulen zur induktiven Aufladung der Stromspeichervorrichtung vorgesehen sind.

6. Lade- und Überwachungssystem nach einem der Ansprüche 1 bis 5, **dadurch gekennzeichnet, dass** Kommunikationseinrichtungen (10) zur Kommunikation des Lademoduls (2) mit benachbarten Lademodulen und/oder mit einem externen Server (11) vorgesehen sind oder die Ladestation (1) eine Sende- und Empfangseinheit zur Kommunikation mit zumindest einem externen Datengerät über ein Funknetz, insbesondere ein Mobilfunknetz oder WLAN besitzt.

7. Lade- und Überwachungssystem nach einem der Ansprüche 1 bis 6, **dadurch gekennzeichnet, dass** das Lademodul (2) oder die Ladestation (1) ein Anfragesignal vom externen Datengerät empfängt und ein Antwortsignal an das externe Datengerät übersendet, wobei das externe Datengerät ein Server (11), ein Mobiltelefon, ein Smartphone, ein Notebook oder dergleichen ist.

8. Lade- und Überwachungssystem nach einem der Ansprüche 1 bis 7, **dadurch gekennzeichnet, dass** Einrichtungen zur Anzeige des Ladezustandes der Stromspeichervorrichtung an der Ladestation (1) und/oder auf einem Mobilfunkgerät vorgesehen sind.

9. Lade- und Überwachungssystem nach einem der Ansprüche 1 bis 8, **dadurch gekennzeichnet, dass** die Verriegelungsvorrichtung (9) zur Aufladung der Stromspeichervorrichtung benutzt wird, indem sie den Anschluss an den Stromkreis bereitstellt.

10. Lade- und Überwachungssystem nach einem der Ansprüche 1 bis 9, **dadurch gekennzeichnet, dass** das Lademodul (2) mit einem Münzschloss und/oder einer Elektronikeinheit zum Austausch von Zahlungsinformationen mit einer EC-Karte oder Kreditkarte versehen ist, wobei das Lademodul (2) seinen Dienst erst nach Abgabe eines vorbestimmten Geldbetrages aufnimmt oder das Elektrozweirad erst nach Rechnungsstellung und/oder Bezahlung zur Entnahme aus den Halteeinrichtungen (5) freigibt oder die Bezahlung über ein Mobilfunkgerät mit Zahlfunktion erfolgt ist.

11. Lade- und Überwachungssystem nach Anspruch 6, **dadurch gekennzeichnet, dass** über den Server (11) der Kommunikationseinrichtung (10) ein Software-upload übermittelbar ist, und dass das Lademodul (2) ein Bedienfeld, beispielsweise ein Touchscreen besitzt über welches der Benutzer direkt mit dem Lademodul (2) und/oder dem Server (11) kommuniziert, wobei über eine separate Dateneingabe eine Identifizierung des Benutzers oder die Abrechnung der Leihgebühr eines Leihrades bei Rückstellung erfolgt, und wobei über den Datenaustausch zwischen der Kommunikationseinrichtung (10) und dem Server (11) jederzeit feststellbar ist, welches Elektrozweirad sich wann wo befindet, sobald ein Kontakt zu einer Ladestation (1) hergestellt ist.

12. Lade- und Überwachungssystem nach einem der Ansprüche 1 bis 11, **dadurch gekennzeichnet, dass** der im Einsteckteil (6) verborgene Datenträger (7) zusätzlich Daten zur Identifizierung des Elektrozweirades bzw. seines Besitzers enthält, welche vom Lademodul (2) an den Server (11) übermittelt werden.

13. Lade- und Überwachungssystem nach einem der Ansprüche 1 bis 12, **dadurch gekennzeichnet, dass** über die Diagnoseeinrichtung im Lademodul (2) vom Server (11) und/oder mittels einer am Mobilfunkgerät installierten App vom Benutzer die Diagnosedaten abfragbar sind, insbesondere Informationen über den Aufladevorgang, Fehlverhalten der Stromspeichervorrichtung, Reaktionen der Stromspeichervorrichtung bei Überhitzung usw., wobei bei Gefahr in Verzug durch die Diagnoseeinrichtung der Ladevorgang unterbrochen und der Server (11) bzw. das Mobilfunkgerät des Besitzers mit einer entsprechenden Information versorgt wird.

14. Lade- und Überwachungssystem nach einem der Ansprüche 1 bis 13, **dadurch gekennzeichnet, dass** bei widerrechtlicher Entnahme des Elektrozweirades aus der Ladestation (1) das Lademodul (2) eine Diebstahlinformation an den Server (11) und/oder an das Handy des Besitzers unter Angabe des Diebstahlortes absendet.

15. Lade- und Überwachungssystem nach einem der Ansprüche 1 bis 14, **dadurch gekennzeichnet, dass** eine Reihe von Lademodulen (2) an einer Ladestation (1) gemeinsam über eine Kommunikationseinrichtung (10) mit dem externen Server (11) kommunizieren.
